# FASCICULE DE BREVET EUROPEEN

(11) **EP 0 645 555 B1**
(45) Date de publication et mention de la délivrance du brevet: **13.08.1997**
(21) Numéro de dépôt: 94420248.0
(22) Date de dépôt: 16.09.1994
(51) Int. Cl.: F16F 11/00, F16F 7/02, H02K 37/22

(54) **Amortisseur pour engrenage mené par un moteur pas-à-pas**
Dämpfungsvorrichtung für Getriebe mit Schrittmotorenantrieb
Damper for gear driven by a stepmotor

(30) Priorité: 23.09.1993 FR 9311542
(43) Date de publication de la demande: 29.03.1995
(73) Titulaire: JEAMBRUN APPAREILLAGES S.A.R.L., F-25120 Maiche (FR)
(72) Inventeur: Jeambrun, Georges, F-25120 Maiche (FR)
(74) Mandataire: Kiehl, Hubert

(56) Documents cités:
- EP-A- 0 042 912
- EP-A- 0 392 345
- FR-A- 2 390 851
- FR-A- 2 406 758
- US-A- 3 783 312

## Description

La présente invention est relative à un amortisseur pour engrenage, et plus particulièrement pour un engrenage réalisant une réduction de l'angle de rotation de la sortie d'un moteur électrique pas-à-pas.

Dans un tel moteur pas-à-pas, une accélération brutale est effectuée sur la denture du pignon à chaque passage de pas, cette accélération se transmettant à toutes les roues dentées successives de l'engrenage. Cette accélération est suivie immédiatement par une décélération toute aussi brutale qui provoque le blocage du pignon, qui lui même immobilise simultanément les roues dentées de l'engrenage.

Ces variations importantes de vitesse de rotation s'effectuent à une cadence élevée, ce qui provoque des ondes de chocs entre le moteur électrique et l'axe de sortie de l'engrenage réducteur. Ces ondes de chocs s'interfèrent entre elles et génèrent un bruit cyclique. Outre l'usure prématurée de l'engrenage due à la fatigue causée par les ondes de chocs répétitives, le bruit engendré dans l'engrenage le rend inutilisable dans de nombreux domaines.

Le document EP-A-0 042 912 montre un dispositif d'amortissement pour un moteur pas-à-pas.

Le but de la présente invention est un amortisseur pour engrenage mené par un moteur pas-à-pas permettant d'obvier les inconvénients précités tout en préservant la précision de rotation en sortie d'engrenage. De plus, cet amortisseur doit être conçu de telle sorte que sa réalisation soit peu coûteuse, et qu'elle n'entraîne pas de surplus excessif de consommation d'énergie dans le moteur.

Ces buts sont réalisés grâce à un amortisseur pour engrenage mené par un moteur pas-à-pas du fait qu'il comprend une surface cylindrique ménagée sur l'une des roues dentées de l'engrenage, cette surface étant coaxiale à l'axe de cette roue, et au moins un doigt de frottement émergeant hors d'un logement solidaire d'un flasque de l'engrenage, l'extrémité de ce doigt appuyant contre la surface cylindrique perpendiculairement à l'axe de la roue dentée sous l'action d'un moyen élastique interne au logement, ou inversement, la surface cylindrique peut être ménagée sur le flasque, le logement avec le doigt de frottement tournant alors avec la roue dentée.

Le moyen élastique peut être un ressort interne taré agissant entre le fond du logement et la face interne du doigt ; ou une zone de compression élastique au niveau de la face interne du doigt du fait que le logement est réalisé en un matériau synthétique élastique tel qu'un élastomère, la profondeur de logement étant inférieure à la profondeur du doigt. Dans ce dernier cas, le logement et le doigt peuvent être étagés, la profondeur de la chambre externe du logement étant inférieure à la profondeur de la tête externe du doigt pour créer alors une zone de compression élastique au niveau de la face interne de la tête du doigt.

Ainsi, les doigts créent un couple de frein tangentiel mesuré sur la roue, et par la même sur toutes les roues, ce qui modifie sensiblement le mode de répercussion des ondes de chocs.

De préférence, l'embouchure du logement est conique dans le plan parallèle au plan de la roue dentée, le cône présentant un angle au sommet inférieur à 10 degrés. Les doigts ont alors un rôle d'amortisseur angulaire supplémentaire dû au jeu volontairement laissé entre leur surface extérieure et l'alésage constituant le logement.

Le phénomène d'amortissement peut, de plus, être ajusté selon les circonstances en multipliant le nombre de doigts, et/ou en changeant le diamètre de la surface cylindrique, et/ou en changeant la puissance des ressorts ou le matériau synthétique élastique constituant le logement.

Utilement, la surface cylindrique et le doigt de frottement sont réalisés ou sont revêtus d'un matériau synthétique de coefficient de frottement préétabli. Ce choix judicieux des matériaux permet à la fois de réaliser économiquement les différentes pièces par injection, et de garantir la fonction d'amortissement dans le temps.

Après de nombreux essais en atelier, on a constaté qu'il est préférable que l'amortisseur soit monté en parallèle entre la dernière roue dentée (côté sortie réducteur) et un des flasques du réducteur pour éviter, au mieux, le retour de l'onde de choc vers son origine.

De préférence, la surface cylindrique est orientée à l'intérieur vers l'axe de la roue dentée. Alors, deux doigts de frottement, repoussés par un même ressort central, émergent de part et d'autre d'un logement ouvert en ses deux extrémités et situé sur un diamètre de la surface cylindrique. En alternative, deux doigts émergent chacun d'une paire de logements (38') en matériau synthétique élastique, et qui sont alignés le long d'un diamètre de la surface cylindrique.

Dans cette configuration, la surface cylindrique interne peut constituer la surface interne de la paroi d'une cloche inversée rapportée contre la face de la roue dentée, et le logement est alors tenu au milieu de l'espace interne de la cloche par un plateau circulaire fixé au flasque et faisant office de couvercle pour la cloche, ou inversement, la cloche étant rapportée contre le flasque et le plateau contre la roue. Plus particulièrement, le doigt de frottement peut être réalisé en matériau synthétique commercialisé sous la dénomination "Delrin", alors que la cloche peut être réalisée en matériau synthétique commercialisé sous la dénomination "Zitel".

Le volume contenu dans la cloche, et fermé par le plateau, peut être rempli d'un liquide visqueux contribuant à la fonction d'amortissement.

L'invention sera mieux comprise à l'étude d'un mode de réalisation pris à titre d'exemple nullement limitatif et décrit par les figures suivantes :
- la figure 1 est une vue schématique en perspective d'un amortisseur selon l'invention équipant un engrenage entraîné par un moteur pas-à-pas,
- la figure 2 est une vue en coupe de l'amortisseur assemblé,
- la figure 3 est une vue agrandie de l'embouchure du logement contenant un doigt de frottement et
- la figure 4 est une vue en coupe d'un autre mode de réalisation de l'amortisseur.

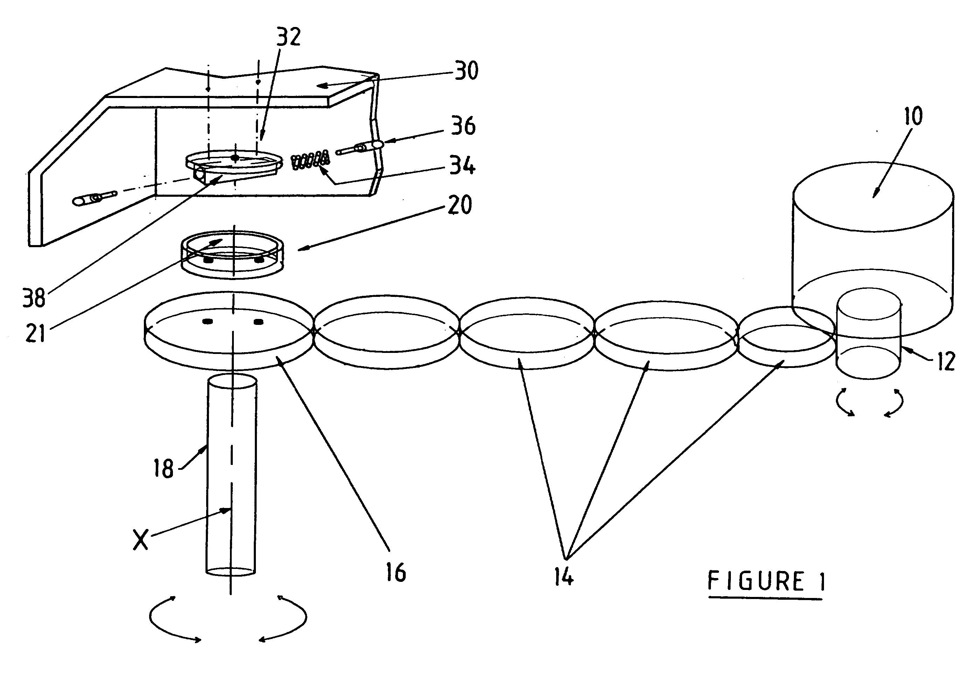

Sur la figure 1 est illustré schématiquement un moteur électrique pas-à-pas 10, dont l'axe de sortie 12 est en prise avec un engrenage 14 constitué d'une pluralité de roues dentées engrenées. Outre une fonction de transmission de couple de rotation, cet engrenage peut également effectuer une réduction de vitesse de rotation, c'est-à-dire que l'axe de sortie 18 de la dernière roue 16 n'effectue qu'un dixième ou un centième du tour initialement effectué par l'arbre de sortie du moteur 10. L'axe de sortie 18 peut être, par exemple, une vis sans fin déplaçant une pièce taraudée mobile seulement en translation. L'emploi d'un moteur pas-à-pas permet alors de déplacer cette pièce à une vitesse et en une position déterminée avec une très grande précision. Ce dispositif peut être utilisé, entre autres, dans le domaine de la mesure : soit de débit, de dosage, soit au sein d'un dispositif de régulation ou d'asservissement.

Toutefois, la progression saccadée inhérente au moteur pas-à-pas engendre un bruit dans l'engrenage du fait que chaque pas de moteur génère une double onde de choc : au début et à la fin. Ces ondes de chocs successives s'interfèrent en fonction des données géométriques et cinématiques de l'engrenage en un régime vibratoire pouvant présenter un ou plusieurs noeuds d'amplitude maximum. Pour étouffer ce régime vibratoire, on prévoit un amortisseur, de préférence monté sur le dernier engrenage de sortie 16 constituant, en tous les cas, un minimum ou un maximum du régime.

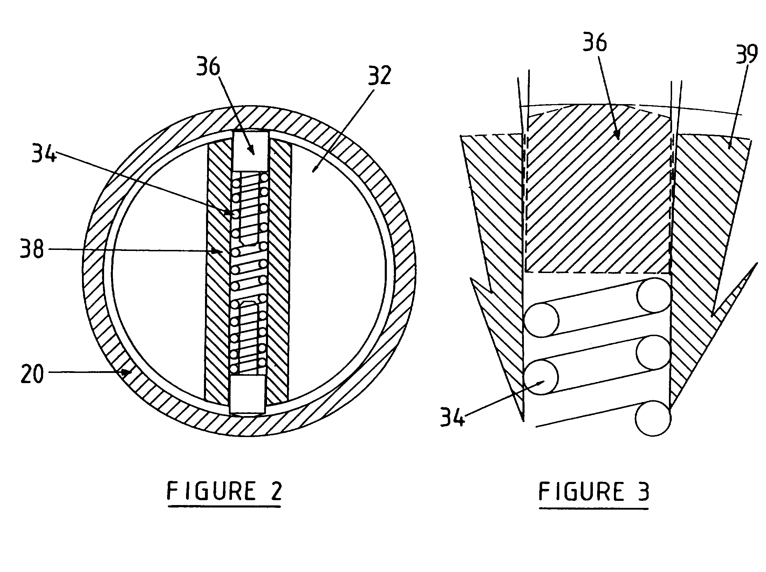

Comme illustré sur les figures 1 et 2, cet amortisseur comprend d'une part un plateau fixe 32 solidaire d'un flasque 30 du réducteur, ce plateau supportant un logement 38 contenant des doigts de frottement 36. Ces doigts (ou patins) se présentent perpendiculairement à l'axe X de la dernière roue dentée 16 de l'engrenage 14. Cet amortisseur comprend, d'autre part, une cloche 20 solidaire de la dernière roue dentée 16 et coaxiale au plateau 32. Les doigts appuient, par l'intermédiaire d'un ressort taré 34, sur la surface cylindrique intérieure 21 de cette cloche.

Comme mieux illustré sur la figure 3, l'embouchure 39 du logement 38 est légèrement élargie de part et d'autre d'un angle "a" de faible valeur, par exemple compris entre 2 et 6 degrés, de préférence 3 degrés, pour laisser un jeu latéral au doigt de friction 36. Ce jeu modifie sensiblement le mode de réaction de ce doigt contre la surface cylindrique 21 solidaire de la roue dentée 16, et augmente d'autant le facteur d'amortissement.

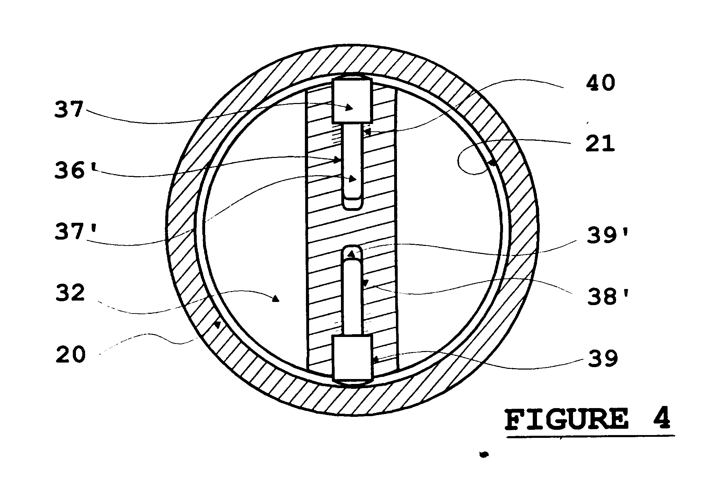

En alternative et comme illustré sur la figure 4, le plateau 32 supporte une barre diamétrale réalisée en un matériau synthétique élastique, tel qu'un élastomère, dans laquelle est ménagée une paire de logements 38' borgnes opposés et alignés dans le prolongement l'un de l'autre. Chaque logement est étagé en une chambre externe 39 et un conduit de guidage interne 39'. Dans chaque logement 38' est installé un doigt 36' également étagé comprenant une tête de frottement externe 37 et une tige de guidage interne 37'. La profondeur de la tête 37 est supérieure à la profondeur de la chambre externe 39 de telle sorte que lorsque cette tête appuie contre la surface cylindrique 21 de frottement de la cloche 20, il se crée, au niveau du décrochement, une zone de compression élastique 40 assurant une poussée de la tête contre la surface. La valeur de cette poussée peut être prédéterminée en utilisant un élastomère plus ou moins dur et/ou réduisant la profondeur de la chambre externe, soit lors de la construction, soit en insérant une rondelle de fond.

En alternative, le plateau et son logement peuvent faire partie intégrante de la roue de sortie, tandis que la cloche fait alors partie intégrante du flasque de l'engrenage réducteur.

Le plateau 32 fait simultanément office de couvercle pour la cloche 20 ce qui permet de faire fonctionner l'amortisseur dans un bain lubrifiant et visqueux. Ce lubrifiant contribue à améliorer la fonction d'amortisseur. L'étanchéité de l'amortisseur peut être améliorée par une battue de la cloche non illustrée et qui se clipse sur le plateau.

Le fait d'implanter l'amortisseur à l'extérieur de la chaîne cinématique du réducteur permet de conserver intégralement la précision de chaque pas généré par le moteur sur l'axe de sortie.

L'amplitude des vibrations à amortir est d'autant plus petite que le rapport de réduction est important. Par ailleurs, la fréquence des vibrations sera d'autant plus courte que les dimensions (module, nombre de dents et masse) des roues de l'engrenage sont petites. En pratique, ces mouvements sont plutôt imperceptibles, étant donné que la valeur angulaire à amortir est égale au quotient de la valeur angulaire d'accélération et de décélération due au passage du pas du moteur, et du rapport de réduction du réducteur.

Le diamètre de la surface cylindrique 21, la force du ressort taré 34 ainsi que le coefficient de frottement des matériaux composant la cloche 20 et les doigts 36 sont alors établis en fonction des paramètres mentionnés précédemment. Par exemple, dans l'exemple illustré, le diamètre de la surface cylindrique est de l'ordre de 20 millimètres, la force du ressort est de l'ordre de 500 grammes, la cloche est réalisée en matière plastique commercialisée sous la dénomination "Zitel" et les doigts sont réalisés en matière plastique commercialisée sous la dénomination "Delrin" (marque déposée).

Cet amortisseur évite donc le rebondissement des roues dentées entre elles tout en consommant très peu d'énergie. Ces avantages sont très intéressants en particulier dans le domaine médical où le bruit et l'autonomie des appareils sont déterminants. Par exemple, le dispositif illustré sur les figures peut être intégré dans un élément de mesure et de puissance d'un pousse-seringue. La vis fait partie intégrante de la chaîne cinématique du réducteur. L'écrou non tournant se déplace sur la vis et entraîne un poussoir qui agit sur le corps mobile de la seringue. La variation de débit est obtenue par l'utilisation d'un moteur pas-à-pas.

De nombreuses améliorations peuvent être apportées à cet amortisseur dans le cadre de l'invention.

## Revendications

1. Amortisseur pour engrenage mené par un moteur pas-à-pas caractérisé en ce qu'il comprend :
- une surface cylindrique (21) ménagée sur l'une (16) des roues dentées de l'engrenage, cette surface étant coaxiale à l'axe X de cette roue,
- au moins un doigt de frottement (36) émergeant hors d'un logement (38) solidaire d'un flasque (30) de l'engrenage, l'extrémité de ce doigt appuyant contre la surface cylindrique (21) perpendiculairement à l'axe X de la roue dentée, sous l'action d'un moyen élastique (34) interne au logement,
ou inversement, la surface cylindrique (21) étant ménagée sur le flasque (30), le logement (38) avec le doigt de frottement (36) tournant avec la roue dentée.

2. Amortisseur selon la revendication 1, caractérisé en ce que l'embouchure (39) du logement (38) est conique dans le plan parallèle au plan de la roue dentée, le cône présentant un angle au sommet inférieur à 10 degrés.

3. Amortisseur selon la revendication 1, caractérisé en ce que la surface cylindrique (21) et le doigt de frottement (35) sont réalisés ou sont revêtus d'un matériau synthétique de coefficient de frottement préétabli.

4. Amortisseur selon l'une des revendications précédentes, caractérisé en ce qu'il est monté sur la dernière roue de sortie de l'engrenage.

5. Amortisseur selon la revendication 1, caractérisé en ce que le moyen élastique est un ressort interne (34) agissant entre le fond du logement (38) et la face interne du doigt (36).

6. Amortisseur selon la revendication 1, caractérisé en ce que le logement (38') est réalisé en un matériau synthétique élastique, tel qu'un élastomère, et en ce que la profondeur du logement est inférieure à la profondeur du doigt (36') pour créer une zone de compression élastique (40) au niveau de la face interne du doigt (36').

7. Amortisseur selon la revendication 6, caractérisé en ce que le logement (38') et le doigt (36') sont étagés, la profondeur de la chambre externe (39) du logement étant inférieure à la profondeur de la tête externe du doigt (37) pour créer une zone de compression élastique (40) au niveau de la face interne de la tête (37) du doigt (36').

8. Amortisseur selon l'une des revendications précédentes, caractérisé en ce que la surface cylindrique (21) est orientée à l'intérieur vers l'axe de la roue dentée (16), et en ce que deux doigts de frottement (36) repoussés par un même ressort central (34) émergent de part et d'autre d'un même logement (38) situé sur un diamètre de la surface cylindrique, ou en ce que deux doigts émergent chacun d'une paire de logements (38') en matériau synthétique élastique, et qui sont alignés le long d'un diamètre de la surface cylindrique.

9. Amortisseur selon la revendication 8, caractérisé en ce que la surface cylindrique interne (21) est la surface interne de la paroi d'une cloche inversée (20) rapportée contre la face de la roue dentée (16), et en ce que le logement (38), ou paire de logements alignés (38'), sont tenus dans la cloche par un plateau (32) circulaire fixé au flasque et faisant office de couvercle pour la cloche (20), ou inversement, la cloche étant rapportée contre le flasque et le plateau contre la roue.

10. Amortisseur selon la revendication 9, caractérisé en ce que le volume contenu dans la cloche et fermé par le plateau est rempli d'un liquide visqueux.

11. Amortisseur selon les revendications 3 et 9, caractérisé en ce que le doigt de frottement est réalisé en matériau synthétique polyacétate alors que la cloche (20) est réalisée en matériau synthétique.

## Patentansprüche

1. Dämpfungsvorrichtung für ein von einem Schrittmotor angetriebenes Getriebe, dadurch gekennzeichnet, daß sie umfaßt:
- eine zylindrische Fläche (21), angeordnet auf einem Zahnrad (16) des Getriebes, wobei diese Fläche koaxial zur Achse X dieses Rades steht,
- wenigstens einen Reibungsfinger (36), der aus einer mit einer Wand (30) des Getriebes verbundenen Aufnahme (38) hervorragt, wobei das Ende dieses Fingers unter Wirkung eines elastischen Mittels (34) im Inneren der Aufnahme lotrecht zur Achse X des Zahnrades gegen die zylindrische Fläche (21) drückt,
oder umgekehrt, wobei die zylindrische Fläche (21) auf der Wand (30) angeordnet ist, wobei sich die Aufnahme (38) mit dem Reibungsfinger (36) mit dem Zahnrad dreht.

2. Dämpfungsvorrichtung nach Anspruch 1, dadurch gekennzeichnet, daß die Mündung (39) der Aufnahme (38) in der zur Ebene des Zahnrades parallelen Ebene konisch ist, wobei der Konus einen Spitzenwinkel von weniger als 10° aufweist.

3. Dämpfungsvorrichtung nach Anspruch 1, dadurch gekennzeichnet, daß die zylindrische Fläche (21) und der Reibungsfinger (36) aus einem synthetischen Material mit vorbestimmtem Reibungskoeffizienten bestehen oder damit überzogen sind.

4. Dämpfungsvorrichtung nach einem der vorangegangenen Ansprüche, dadurch gekennzeichnet, daß sie auf dem letzten Rad am Ausgang des Getriebes angeordnet ist.

5. Dämpfungsvorrichtung nach Anspruch 1, dadurch gekennzeichnet, daß das elastische Mittel eine innere Feder (34) ist, die zwischen dem Boden der Aufnahme (38) und der Innenseite des Fingers (36) wirkt.

6. Dämpfungsvorrichtung nach Anspruch 1, dadurch gekennzeichnet, daß die Aufnahme (38') aus einem elastischen Kunststoff, wie einem Elastomer besteht, und dadurch, daß die Tiefe der Aufnahme geringer ist als die Länge des Fingers (36'), um eine Zone (40) elastischer Kompression im Bereich der Innenseite des Fingers (36') zu schaffen.

7. Dämpfungsvorrichtung nach Anspruch 6, dadurch gekennzeichnet, daß die Aufnahme (38') und der Finger (36') gestuft sind, wobei die Tiefe der äußeren Kammer (39) der Aufnahme geringer ist als die Tiefe des äußeren Kopfes (37) des Fingers, um eine Zone (40) elastischer Kompression im Bereich der Innenseite des Kopfes (37) des Fingers (36') zu schaffen.

8. Dämpfungsvorrichtung nach einem der vorangegangenen Ansprüche, dadurch gekennzeichnet, daß die zylindrische Fläche (21) nach innen zur Achse des Zahnrades (16) gerichtet ist, und daß zwei Reibungsfinger (36), die von derselben zentralen Feder (34) zurückgedrückt werden, aus beiden Seiten derselben Aufnahme (38) hervorragen, die auf einem Durchmesser der zylindrischen Fläche angeordnet ist, oder dadurch, daß sie aus einem Aufnahmepaar (38') aus elastischem Kunststoff hervorragen, und daß sie entlang einem Durchmesser der zylindrischen Fläche ausgerichtet sind.

9. Dämpfungsvorrichtung nach Anspruch 8, dadurch gekennzeichnet, daß die zylindrische Innenfläche (21) die innere Fläche der Wand einer umgedrehten Glocke (20) ist, die gegen die Seite des Zahnrades (16) gesetzt ist und dadurch, daß das Lager (38) oder das ausgerichtete Lagerpaar (38') in der Glocke von einer kreisförmigen Platte (32) gehalten ist, die an der Wand befestigt ist und als Deckel für die Glocke (20) dient, oder umgekehrt, daß die Glocke gegen die Wand gesetzt ist und die Platte gegen das Rad.

10. Dämpfungsvorrichtung nach Anspruch 9, dadurch gekennzeichnet, daß das von der Glocke umschlossene und von der Platte eingeschlossene Volumen mit einem viskosen Liquid gefüllt ist.

11. Dämpfungsvorrichtung nach einem der Anspruche 3 und 9, dadurch gekennzeichnet, daß der Reibungsfinger aus einem Polyacetat-Kunststoff und die Glocke (20) aus Kunststoff hergestellt ist.

## Claims

1. Damper for gearing driven by a stepping motor, the said damper being characterised in that it comprises:
- a cylindrical surface (21) arranged on one (16) of the toothed wheels of the gearing system, the said surface being coaxial with the axis X of the said wheel,
- at least one friction finger (36) emerging out of a housing (38) integral with one cheek (30) of the gearing system, the end of the said finger bearing against the cylindrical surface (21), perpendicularly to the axis X of the toothed wheel, under the action of an inner elastic means (34) in the housing,
- or conversely, the cylindrical surface (21) being arranged on the cheek (30), the housing (38) with the friction finger (36) turning with the toothed wheel.

2. Damper according to claim 1, characterised in that the mouth (39) of the housing (38) is conical in the plane parallel to the plane of the toothed wheel, the cone having an angle at the top of less than 10 degrees.

3. Damper according to claim 1, characterised in that the cylindrical surface (21) and the friction finger (35) are produced from, or coated with, a synthetic material having a pre-established coefficient of friction.

4. Damper according to one of the preceding claims, characterised in that the said damper is mounted on the last output wheel of the gearing system.

5. Damper according to claim 1, characterised in that the elastic means is an inner spring (34) acting between the bottom of the housing (38) and the inner face of the finger (36).

6. Damper according to claim 1, characterised in that the housing (38') is produced from an elastic synthetic material, such as an elastomer, and in that the depth of the housing is less than the depth of the finger (36'), so as to set up an elastic compression zone (40) level with the inner face of the finger (36').

7. Damper according to claim 6, characterised in that the housing (38') and the finger (36') are stepped, the depth of the outer chamber (39) of the housing being less than the depth of the outer head of the finger (37), so as to set up an elastic compression zone (40) level with the inner face of the head (37) of the finger (36').

8. Damper according to one of the preceding claims, characterised in that the cylindrical surface (21) is orientated, on the inside, towards the axis of the toothed wheel (16), and in that two friction fingers (36), which are driven out by the same central spring (34), emerge on either side of the same housing (38) which is situated on a diameter of the cylindrical surface, or in that two fingers each emerge from a pair of housings (38') which are made of elastic synthetic material and are aligned along a diameter of the cylindrical surface.

9. Damper according to claim 8, characterised in that the inner cylindrical surface (21) is the inner surface of the wall of an inverted drum (20) which is fitted against the face of the toothed wheel (16), and in that the housing (38), or pair of aligned housings (38'), are held in the drum by a circular plate (32) fixed to the cheek and acting as a lid for the drum (20), or conversely, the drum is fitted against the cheek and the plate against the wheel.

10. Damper according to claim 9, characterised in that the volume contained in the drum and closed by the plate is filled with a viscous liquid.

11. Damper according to claims 3 and 9, characterised in that the friction finger is produced from polyacetate synthetic material, while the drum (20) is produced from synthetic material.
